# EUROPEAN PATENT APPLICATION

(11) **EP 4 261 111 A1**
(43) Date of publication of application: **18.10.2023**
(21) Application number: 22168118.2
(22) Date of filing: 13.04.2022
(51) Int. Cl.: B62D 57/032, B25J 19/00

(54) **ROBOTIC INSPECTION TOOL FOR USE IN CONFINED SPACES**

(71) Applicant: Siemens Energy Global GmbH & Co. KG, 81739 München (DE)
(72) Inventor: Obermayr, Luka Maxim, 47057 Duisburg (DE); Obermayr, Stefan, 47199 Duisburg (DE)

(57) **Abstract**

A robot (100) for use in a confined space includes a body (102) and an arrangement of six legs (104). Each leg (104) is connected to the body (102) and includes a plurality of linkages arranged to define a first axis (302), a second axis (304), a third axis (306), a fourth axis (308) and a fifth axis (310). The first axis (302) is normal to and coplanar with the second axis (304) regardless of the position of the plurality of linkages. The robot (100) also includes a plurality of actuators, each actuator coupled to the leg (104) and arranged to pivotally move a portion of the plurality of linkages about one of the first axis (302), the second axis (304), the third axis (306), the fourth axis (308) and the fifth axis (310). The robot (100) also includes a power supply coupled to the body (102) and operable to deliver power to each actuator of the plurality of actuators and a controller (204) coupled to the power supply and operable to selectively deliver power to each actuator of each leg (104) to move the robot (100) .

## Description

The invention relates to a robotic inspection tool for use ins confined spaces and a method of inspection.

Inspection of components or features that are in remote locations or within confined spaces can be expensive and, in some cases, hazardous. In some applications, airborne drones may be used for remote inspections.

However, these drones are not able to work in confined spaces and the requirements of flight greatly limit the time that these drones can operate between battery charges and the weight of the inspection tools these drones can carry.

It is therefore aim of the invention to overcome this problem.

The problem is solved by a tool according to claim 1 or 11 and a method according to claim 15.

In the dependent claims further advantages are listed which can be combined arbitrarily with each other to yield further advantages as especially listed here:
1. A robot (100) for use in a confined space,
   the robot (100) comprising:
   a body (102);
   a power supply coupled to and supported by the body (102);
   a plurality of legs (104),
   each leg (104) including:
      a mounting member (312) fixedly attached to the body (102);
   a pivot member (314) coupled to the mounting member (312) for pivotal movement about a first axis (302);
   a shoulder mount (316) coupled to the mounting member (312) for pivotal movement about a second axis (304), the second axis (304) normal to and coplanar with the first axis (302) in all operating positions of the shoulder mount (316) and the pivot member (314);
   a shoulder member (318) coupled to the shoulder mount (316) for pivotal movement about a third axis (306), the third axis (306) normal to the first axis (302) and the second axis (304) in all operating positions of the shoulder mount (316) and the shoulder member (318);
   an arm member (320) coupled to the shoulder member (318) for pivotal movement about a fourth axis (308) that is parallel to the third axis (306); and
   a foot (322) coupled to the arm member (320) for pivotal movement about a fifth axis (310) that is parallel to the third axis (306); and
   a controller (204) disposed within the body (102) and operable to control the movement of each of the foot (322), the arm member (320), the shoulder member (318), the shoulder mount (316), and the pivot member (314) for each leg (104) of the plurality of legs (104).
2. The robot of claim 1,
   wherein the power supply includes a rechargeable battery (202) .
3. The robot of any claim 1 or 2,
   wherein the plurality of legs (104) includes six legs (104) .
4. The robot of any claims 1, 2 or 3,
   further comprising a first actuator (336) positioned within the mounting member (312) and
   operable to rotatably position the pivot member (314) with respect to the mounting member (312) about the first axis (302) .
5. The robot of claim 4,
   further comprising a second actuator (338) positioned within the pivot member (314) and
   operable to rotatably position the shoulder mount (316) with respect to the pivot member (314) about the second axis (304).
6. The robot of claim 5,
   further comprising a third actuator (340) positioned within the shoulder mount (316) and
   operable to rotatably position the shoulder member (318) with respect to the shoulder mount (316) about the third axis (306).
7. The robot of claim 6,
   further comprising a fourth actuator (342) positioned within the arm member (320) and
   operable to rotatably position the arm member (320) with respect to the shoulder member (318) about the fourth axis (308) .
8. The robot of claim 7,
   further comprising a fifth actuator (344) positioned within the arm member (320) and
   operable to rotatably position the foot (322) with respect to the arm member (320) about the fifth axis (310).
9. The robot of claim 4,
   wherein the first actuator (336) includes an electric motor.
10. The robot of any of the preceding claims,
   wherein each leg (104) of a portion of the plurality of legs (104) includes a magnet (402) coupled to the foot (322) of the respective leg (104).
11. The robot of any of the preceding claims,
   further comprising a non-destructive examination tool coupled to the foot (322) of a first leg (300) (104) of the plurality of legs (104).
12. The robot of any of the preceding claims,
   further comprising an optical sensor (106) connected to the body (102) and operable to capture a visual image.
13. The robot of any of the preceding claims,
   further comprising a transceiver coupled to the body (102) and operable to receive and transmit signals.
14. The robot of claim 13,
   wherein the transceiver is connected to the controller (204), and
   wherein the transceiver receives control signals from an operator.
15. A robot for use in a confined space,
   the robot (100) comprising:
      a body (102);
      an arrangement of six legs (104),
      each leg (104) connected to the body (102) and
   including:
      a plurality of linkages arranged to define a first axis (302), a second axis (304), a third axis (306), a fourth axis (308) and a fifth axis (310), the first axis (302) normal to and coplanar with the second axis (304) regardless of the position of the plurality of linkages; and
      a plurality of actuators,
      each actuator coupled to the leg (104) and
      arranged to pivotally move a portion of the plurality of linkages about one of the first axis (302), the second axis (304), the third axis (306), the fourth axis (308) and the fifth axis (310);
      a power supply coupled to the body (102) and operable to deliver power to each actuator of the plurality of actuators; and
      a controller (204) coupled to the power supply and operable to selectively deliver power to each actuator of each leg (104) to move the robot (100).
16. The robot of claim 15,
   wherein each actuator of the plurality of actuators includes an electric motor.
17. The robot of claim 15 or 16,
   wherein the power supply includes a rechargeable battery (202) .
18. The robot of any claims 15, 16 or 17,
   further comprising an optical sensor (106) connected to the body (102) and operable to capture a visual image.
19. The robot of any claim 15, 16, 17, 18,
   further comprising a transceiver coupled to the body (102) and operable to receive and transmit signals.
20. The robot of any of the preceding claims 15 to 19, wherein the transceiver is connected to the controller (204), and wherein the transceiver receives control signals from an operator.
21. The robot of any of the preceding claims 15 to 20, wherein four of the legs (104) include a magnet (402) coupled to a foot (322) positioned at a first end of each of the respective legs (104).
22. The robot of any of the preceding claims 15 to 21, further comprising a non-destructive examination tool coupled to a foot (322) positioned at a first end of a first leg (300) (104) of the six legs (104).
23. A method of operating a robot (500),
   the method comprising using a robot (100) to any of the preceding claims,
   especially:
      positioning the robot (100) in a confined space, the robot (100) including a plurality of legs (104);
      sequentially moving the legs (104) to propel the robot (100) from a first position to an inspection position;
      visually confirming the robot (100) is in the inspection position using an optical sensor (106);
      coupling a non-destructive examination tool to a first leg (300) of the plurality of legs (104);
      positioning the non-destructive examination tool in an inspection position; and
      performing a non-destructive test on a component.
24. The method of claim 23,
   further comprising magnetically attaching the robot (100) to a feature within the confined space.
25. The method of claim 23 or 24,
   further comprising performing an ultrasonic examination of the component.

It shows
Figure 1 is a perspective view of a robot including a body and a plurality of legs,
Figure 2 is a bottom view of the robot of figure 1,
Figure 3 is a perspective view of a first leg of the robot of figure 1 and including a foot,
Figure 4 is a side view of a portion of the leg of figure 3 better illustrating the foot with a magnet attached,
Figure 5 illustrates a method of operating a robot in accordance with one embodiment.

In one aspect, a robot for use in a confined space includes a body and a power supply coupled to and supported by the body. The robot also includes a plurality of legs, each leg including a mounting member fixedly attached to the body, a pivot member coupled to the mounting member for pivotal movement about a first axis, a shoulder mount coupled to the mounting member for pivotal movement about a second axis, the second axis normal to and coplanar with the first axis in all operating positions of the shoulder mount and the pivot member, a shoulder member coupled to the shoulder mount for pivotal movement about a third axis, the third axis normal to the first axis and the second axis in all operating positions of the shoulder mount and the shoulder member, an arm member coupled to the shoulder member for pivotal movement about a fourth axis that is parallel to the third axis, and a foot coupled to the arm member for pivotal movement about a fifth axis that is parallel to the third axis. The robot also includes a controller disposed within the body and operable to control the movement of each of the foot, the arm member, the shoulder member, the shoulder mount, and the pivot member for each leg of the plurality of legs.

In one aspect, a robot for use in a confined space includes a body and an arrangement of six legs. Each leg is connected to the body and includes a plurality of linkages arranged to define a first axis, a second axis, a third axis, a fourth axis, and a fifth axis. The first axis is normal to and coplanar with the second axis regardless of the position of the plurality of linkages. The robot also includes a plurality of actuators, each actuator coupled to the leg and arranged to pivotally move a portion of the plurality of linkages about one of the first axis, the second axis, the third axis, the fourth axis, and the fifth axis. The robot also includes a power supply coupled to the body and operable to deliver power to each actuator of the plurality of actuators and a controller coupled to the power supply and operable to selectively deliver power to each actuator of each leg to move the robot.

In one aspect, a method of operating a robot includes positioning the robot in a confined space, the robot including a plurality of legs. The method includes sequentially moving the legs to propel the robot from a first position to an inspection position, visually confirming the robot is in the inspection position using an optical sensor and coupling a non-destructive examination tool to a first leg of the plurality of legs. The method further includes positioning the non-destructive examination tool in an inspection position and performing a non-destructive test on a component.

The foregoing has outlined rather broadly the technical features of the present disclosure so that those skilled in the art may better understand the detailed description that follows. Additional features and advantages of the disclosure will be described hereinafter that form the subject of the claims. Those skilled in the art will appreciate that they may readily use the conception and the specific embodiments disclosed as a basis for modifying or designing other structures for carrying out the same purposes of the present disclosure. Those skilled in the art will also realize that such equivalent constructions do not depart from the spirit and scope of the disclosure in its broadest form.

Also, before undertaking the Detailed Description below, it should be understood that various definitions for certain words and phrases are provided throughout this patent document, and those of ordinary skill in the art will understand that such definitions apply in many, if not most, instances to prior as well as future uses of such defined words and phrases. While some terms may include a wide variety of embodiments, the appended claims may expressly limit these terms to specific embodiments.

Before any embodiments of the invention are explained in detail, it is to be understood that the invention is not limited in its application to the details of construction and the arrangement of components set forth in this description or illustrated in the following drawings. The invention is capable of other embodiments and of being practiced or of being carried out in various ways. Also, it is to be understood that the phraseology and terminology used herein is for the purpose of description and should not be regarded as limiting.

Various technologies that pertain to systems and methods will now be described with reference to the drawings, where like reference numerals represent like elements throughout. The drawings discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged apparatus. It is to be understood that functionality that is described as being carried out by certain system elements may be performed by multiple elements. Similarly, for instance, an element may be configured to perform functionality that is described as being carried out by multiple elements. The numerous innovative teachings of the present application will be described with reference to exemplary nonlimiting embodiments.

Also, it should be understood that the words or phrases used herein should be construed broadly unless expressly limited in some examples. For example, the terms "including," "having," and "comprising," as well as derivatives thereof, mean inclusion without limitation. The singular forms "a", "an" and "the" are intended to include the plural forms as well unless the context clearly indicates otherwise. Further, the term "and/or" as used herein refers to and encompasses any and all possible combinations of one or more of the associated listed items. The term "or" is inclusive, meaning and/or, unless the context clearly indicates otherwise. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like. Furthermore, while multiple embodiments or constructions may be described herein, any features, methods, steps, components, etc. described with regard to one embodiment are equally applicable to other embodiments absent a specific statement to the contrary.

Also, although the terms "first", "second", "third" and so forth may be used herein to refer to various elements, information, functions, or acts, these elements, information, functions, or acts should not be limited by these terms. Rather these numeral adjectives are used to distinguish different elements, information, functions or acts from each other. For example, a first element, information, function, or act could be termed a second element, information, function, or act, and, similarly, a second element, information, function, or act could be termed a first element, information, function, or act, without departing from the scope of the present disclosure.

In addition, the term "adjacent to" may mean that an element is relatively near to but not in contact with a further element or that the element is in contact with the further portion, unless the context clearly indicates otherwise. Further, the phrase "based on" is intended to mean "based, at least in part, on" unless explicitly stated otherwise. Terms "about" or "substantially" or like terms are intended to cover variations in a value that are within normal industry manufacturing tolerances for that dimension. If no industry standard is available, a variation of twenty percent would fall within the meaning of these terms unless otherwise stated.

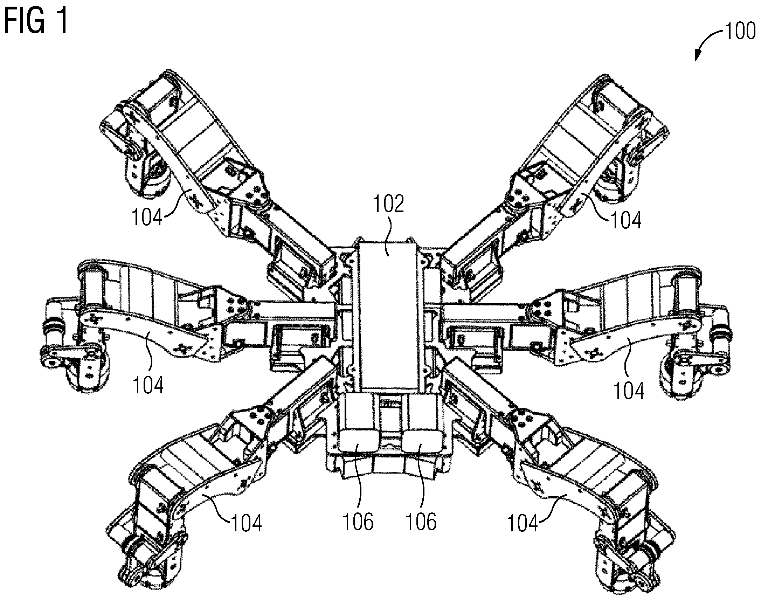

Figure 1 illustrates a robot 100 suitable for use in many locations, but particularly suited for the performance of inspections in confined spaces.

As used herein "confined space" refers to a space or area that is difficult for a person to access or that is hazardous for a portion to access. Difficult spaces can include small spaces within machines, components, or devices. Hazardous spaces could include spaces in which the atmosphere is dangerous, where radiation exposure may be present, high, or exposed locations, or where other dangers may be present. In addition to confined spaces, the robot 100 is well-suited for use in remote areas where onsite inspection can be costly due to travel or other requirements.

The robot 100 includes a body 102 and a plurality of legs 104 extending from the body 102. In the illustrated construction, the robot 100 includes six legs 104.

However, other constructions could include fewer legs 104 or more than six legs 104 as may be required.

The robot 100 also includes especially two sensors in the form of optical sensors 106 connected to the body 102. The optical sensors 106 operate to capture video images that can be stored by the robot 100 and/or transmitted by the robot 100 to another location. A single optical sensor 106 could be used in place of the two optical sensors 106 if desired. However, the provision of two optical sensors 106 spaced apart from one another provides two different angles of view of the scene in front of the optical sensors 106. The two views can be combined to provide a stereo or 3D image of the scene in front of the optical sensors 106. Other constructions could include different sensors in place of the optical sensors 106 or in conjunction with the optical sensors 106 if desired. For example, infrared sensors could be employed as optical sensors 106 or in conjunction with the optical sensors 106.

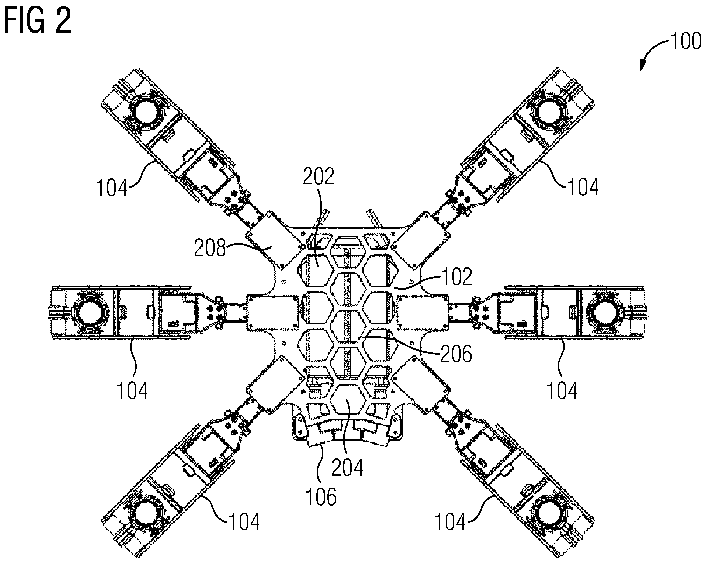

Figure 2 is a bottom view of the robot 100 better illustrating the body 102.

In the illustrated construction, the body 102 includes a frame 206 that defines and protects a body interior. The frame 206 includes a plurality of hexagonal openings that reduce the weight of the frame 206 without significantly reducing the strength and stiffness of the frame 206. Of course, other constructions could include a solid-walled frame or could include different sizes and arrangements of the openings as may be desired.

The frame 206 is elongated in one direction to define a long axis that extends along a centerline of the body 102. The frame 206 includes a plurality of attachment points 208 with each attachment point 208 arranged to receive and support one of the plurality of legs 104. Four of the attachment points 208 are arranged near the corners of the frame 206 with the remaining two attachment points 208 located approximately midway along the long axis of the frame 206.

The body interior is sized and shaped to house, support, and protect components including a power supply such as a battery, and preferably a rechargeable battery 202 and a controller 204. The rechargeable battery 202 is selected and sized to provide power for all the necessary operations of the robot 100 for a desired period of time. For example, some rechargeable batteries 202 may provide for one hour of operation with others providing more or less depending on the power requirements of the robot 100 and any tools used by the robot 100.

The controller 204 is preferably a microprocessor-based controller that includes a processor, memory, and data storage arranged to allow the processor to control all aspects of the operation of the robot 100 either with user intervention and control (e.g., steering or directing the robot 100) or autonomously. In some constructions, the data storage is sized to provide enough data storage for programing the operation of the robot 100 with other constructions including additional data storage to allow for the storage of data that might be collected by the robot 100 (e.g., data from the optical sensors 106, inspection data, path data, etc.).

In addition to the rechargeable battery 202 and the controller 204, the frame 206 may also support and protect other components such as a transmitter, receiver, transceiver, an antenna, other communication devices, other power supplies such as an AC power connector, and the like. The frame 206 is therefore sized to support all the necessary components for a desired application while also protecting those components that need additional protection.

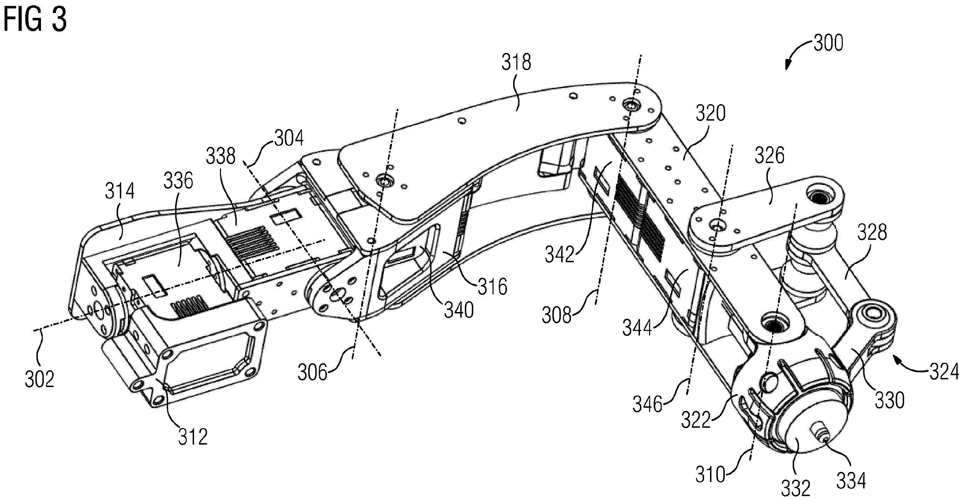

Figure 3 is a perspective view of a first leg 300 better illustrating its details.

It should be understood that each of the legs 104 is similar to the first leg 300 with only minor differences therebetween.

The first leg 300 includes a plurality of linkages or components that are arranged to allow adjacent linkages to move or pivot with respect to one another about one or more of a first axis 302, a second axis 304, a third axis 306, a fourth axis 308, and a fifth axis 310.

A mounting member 312 is arranged to fixedly attach the first leg 300 to one of the attachment points 208 of the frame 206, thereby attaching the first leg 300 to the body 102 of the robot 100. In the illustrated construction, the mounting member 312 includes four apertures arranged to receive fasteners that fixedly attach the mounting member 312 to the frame 206. A first actuator 336 is fixedly attached to the mounting member 312 so that during operation of the first actuator 336, the first actuator 336 does not move with respect to the mounting member 312.

Of course, other arrangements of the mounting member 312 or fastening arrangements are possible.

A pivot member 314 is pivotally coupled to the mounting member 312 for pivotal rotation with respect to the mounting member 312 about the first axis 302. The first actuator 336 is coupled to the pivot member 314 such that operation of the first actuator 336 produces rotational movement of the pivot member 314 with respect to the mounting member 312 about the first axis 302. A second actuator 338 is fixedly attached to the pivot member 314 so that during operation of the second actuator 338, the second actuator 338 does not move with respect to the pivot member 314. Arrangements of the pivot member 314 different from that illustrated in figure 3 are also possible.

A shoulder mount 316 is pivotally coupled to the pivot member 314 for pivotal rotation with respect to the pivot member 314 about the second axis 304. The second actuator 338 is coupled to the shoulder mount 316 such that operation of the second actuator 338 produces rotational movement of the shoulder mount 316 with respect to the pivot member 314 about the second axis 304. A third actuator 340 is fixedly attached to the shoulder mount 316 so that during operation of the third actuator 340, the third actuator 340 does not move with respect to the shoulder mount 316. Arrangements of the shoulder mount 316 different from that illustrated in figure 3 are also possible.

A shoulder member 318 is pivotally coupled to the shoulder mount 316 for pivotal rotation with respect to the shoulder mount 316 about the third axis 306. The third actuator 340 is coupled to the shoulder member 318 such that operation of the third actuator 340 produces rotational movement of the shoulder member 318 with respect to the shoulder mount 316 about the third axis 306. Arrangements of the shoulder member 318 different from that illustrated in figure 3 are also possible.

An arm member 320 is pivotally coupled to the shoulder member 318 for pivotal rotation with respect to the shoulder member 318 about the fourth axis 308. A fourth actuator 342 is fixedly attached to the arm member 320 so that during operation of the fourth actuator 342, the fourth actuator 342 does not move with respect to the arm member 320. The fourth actuator 342 is also coupled to the shoulder member 318 such that operation of the fourth actuator 342 produces rotational movement of the arm member 320 with respect to the shoulder member 318 about the fourth axis 308. A fifth actuator 344 is also fixedly attached to the arm member 320 so that during operation of the fifth actuator 344, the fifth actuator 344 does not move with respect to the arm member 320. Arrangements of the arm member 320 different from that illustrated in figure 3 are also possible.

The arm member 320 includes a first end through which the fourth axis 308 passes and a second end through which the fifth axis 310 passes. A foot 322 is pivotally coupled to the arm member 320 for pivotal movement about the fifth axis 310. A foot linkage 324 couples the foot 322 to the arm member 320 at a second pivot axis 346 between the first end and the second end of the arm member 320. The fifth actuator 344 is coupled to the foot linkage 324 to produce pivotal movement of the foot linkage 324 about the second pivot axis 346.

The foot linkage 324 includes an upper linkage 326, a middle linkage 328, and a lower linkage 330. The upper linkage 326 includes a first end that is connected to the fifth actuator 344 such that operation of the fifth actuator 344 rotates the upper linkage 326 about the second pivot axis 346. The middle linkage 328 includes a first end pivotally connected to a second end of the upper linkage 326 and a second end that is pivotally connected to a first end of the lower linkage 330. A second end of the lower linkage 330 is fixedly attached to the foot 322. In some constructions, the lower linkage 330 is formed as one piece with the foot 322.

The foot 322 includes a foot pad 332 and a fixing member 334. The foot pad 332 is arranged to receive one or more tools that may be desired with the fixing member 334 arranged to facilitate the attachment of the desired tool.

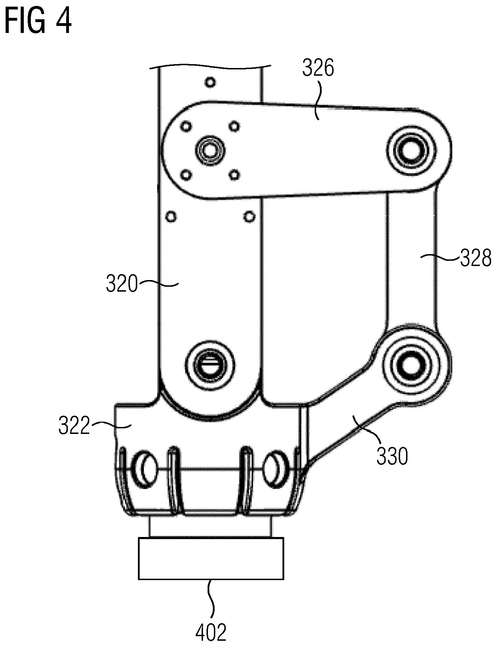

In one example illustrated in figure 4, the tool includes a magnet 402 attached to the first leg 300. The magnet 402 may be disk-shaped with a central aperture that receives the fixing member 334. The fixing member 334 may include a threaded portion that receives a nut that locks the magnet 402 in place. The magnet 402 in some constructions is able to move (e.g., +/-15 degrees) in any direction to allow for any minor misalignment. In these constructions, the magnet 402 will lock in place when the magnet 402 is activated and is biased (e.g., spring-loaded) back into a center position when not activated. Other possible tools include sensors such as non-destructive examination tools. For example, an ultrasonic probe or a magnetic detector could be coupled to the foot 322 of the first leg 300 for use in inspecting a component. Many other tools are suitable for use with the first leg 300. As such, the tools for the first leg 300 should not be limited to the few examples provided herein.

The arrangement of the various axes is selected to make the movement of the first leg 300 and more specifically, the programming of the movement simpler. The first axis 302 extends in a first or "X" direction with the second axis 304 being arranged normal to the first axis 302 such that the second axis extends in a second or "Y" direction. The first axis 302 and the second axis 304 are positioned to intersect with one another at a single point that does not change during movement of the first leg 300. More specifically, regardless of the position or configuration of the first leg 300, the relationship and intersection point of the first axis 302 and the second axis 304 does not change. This arrangement allows the two joints to be considered one omnidirectional joint rather than two unidirectional joints, thus simplifying the kinematic layout significantly, which also greatly simplifies programming movement of the first leg 300.

The third axis 306, the fourth axis 308, and the fifth axis 310 are parallel to one another and normal to the first axis 302 and the second axis 304. Thus, the third axis 306, the fourth axis 308, and the fifth axis 310 extend in a third or "Z" direction with respect to the first axis 302 and the second axis 304. The second pivot axis 346 is also parallel to the third axis 306, the fourth axis 308, and the fifth axis 310.

The position of the foot 322, and more specifically, the position of the fifth actuator 344 is the mirror of the position of the third actuator 340 and the fourth actuator 342 such that the foot 322 remains parallel to the body 102 and the ground or the component on which the robot 100 is positioned. However, this arrangement can be offset to accommodate movement on convex/concave surfaces or when needed during transition from a surface in a first plane to a second surface in a different plane (e.g., from horizontal to vertical).

As noted, the first leg 300 is exemplary of the remaining legs 104 illustrated in the robot 100 of figure 1 and figure 2. While fewer legs 104 than six could be employed, six legs 104 will allow for a secure climb of a vertical surface, where at least four legs 104 may always have magnetic contact to the wall. It is desirable that the magnets 402 are selected such that two magnets 402 can carry the full weight of the robot 100.

As discussed, the robot 100 includes five actuators 336, 338, 340, 342, and 344. Each actuator 336, 338, 340, 342, and 344 may include an electric motor such as a DC motor, a geared motor, a servo motor, a stepper motor, or any other type of actuator operable to produce precise rotational movements to position each of the various linkages as required.

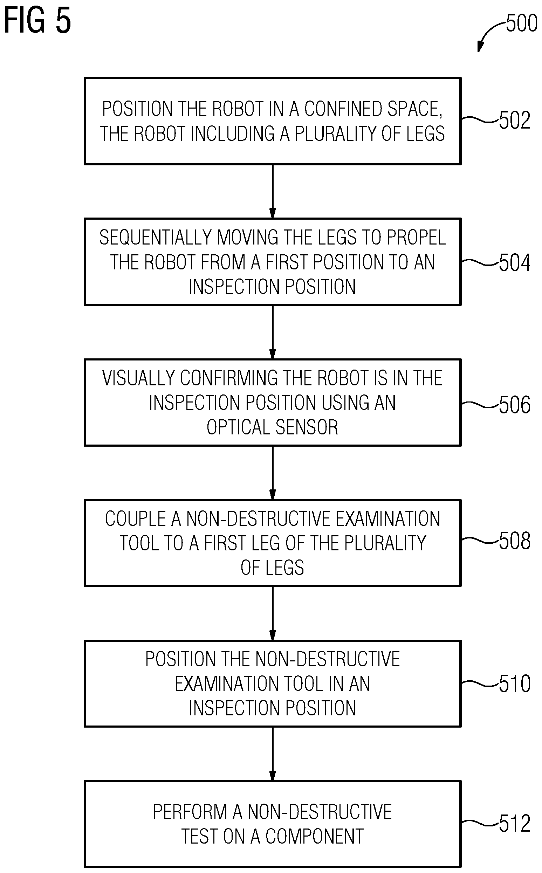

Figure 5 illustrates a method of operating a robot 500. In block 502, the method positions the robot in a confined space, the robot including a plurality of legs. In block 504, the method sequentially moves the legs to propel the robot from a first position to an inspection position. In block 506, the method visually confirms the robot is in the inspection position using an optical sensor. In block 508, the method couples a non-destructive examination tool to a first leg of the plurality of legs. In block 510, the method positions the non-destructive examination tool in an inspection position. In block 512, the method performs a non-destructive test on a component.

In use, the robot 100 is programmed to perform a desired task in a desired confined space or other location. In one use, the robot 100 is remotely controlled by a user who operates the robot 100. The robot 100 sends data collected by the optical sensors 106 to the user to allow the user to see the area around the robot 100 to enhance the ability to control the robot 100. The robot 100 is preprogrammed with the ability to move in certain directions so that the user simply operates a joystick or other input device to guide the robot 100. Specifically, the motion of the legs 104 is preprogrammed to allow simple inputs by a user to be converted to complex and coordinated movement of the various legs 104. Once the robot 100 is in a desired position, data can be collected using a tool, sensor, or instrument. For example, in one construction, the robot 100 is positioned adjacent a component and an ultrasonic probe is positioned on the component to inspect the component for damage.

In another use, the robot 100 is programmed to move between waypoints and to perform inspections at certain points. In this arrangement, the user has little to no input during the operation of the robot 100.

Although an exemplary embodiment of the present disclosure has been described in detail, those skilled in the art will understand that various changes, substitutions, variations, and improvements disclosed herein may be made without departing from the spirit and scope of the disclosure in its broadest form.

None of the descriptions in the present application should be read as implying that any particular element, step, act, or function is an essential element, which must be included in the claim scope: the scope of patented subject matter is defined only by the allowed claims. Moreover, none of these claims are intended to invoke a means plus function claim construction unless the exact words "means for" are followed by a participle.

## Claims

1. A robot (100) for use in a confined space,
the robot (100) comprising:
a body (102);
a power supply coupled to and supported by the body (102),
especially wherein the power supply includes a rechargeable battery (202);
a plurality of legs (104),
especially wherein the plurality of legs (104) includes six legs (104),
each leg (104) including:
a mounting member (312) fixedly attached to the body (102);
a pivot member (314) coupled to the mounting member (312) for pivotal movement about a first axis (302);
a shoulder mount (316) coupled to the mounting member (312) for pivotal movement about a second axis (304),
the second axis (304) normal to and coplanar with the first axis (302) in all operating positions of the shoulder mount (316) and the pivot member (314);
a shoulder member (318) coupled to the shoulder mount (316) for pivotal movement about a third axis (306), the third axis (306) normal to the first axis (302) and the second axis (304) in all operating positions of the shoulder mount (316) and the shoulder member (318);
an arm member (320) coupled to the shoulder member (318) for pivotal movement about a fourth axis (308) that is parallel to the third axis (306); and
a foot (322) coupled to the arm member (320) for pivotal movement about a fifth axis (310) that is parallel to the third axis (306); and
a controller (204) disposed within the body (102) and operable to control the movement of each of the foot (322), the arm member (320), the shoulder member (318), the shoulder mount (316), and the pivot member (314) for each leg (104) of the plurality of legs (104).

2. The robot of claim 1,
further comprising a first actuator (336) positioned within the mounting member (312) and
operable to rotatably position the pivot member (314) with respect to the mounting member (312) about the first axis (302) .

3. The robot of claim 2,
further comprising a second actuator (338) positioned within the pivot member (314) and
operable to rotatably position the shoulder mount (316) with respect to the pivot member (314) about the second axis (304).

4. The robot of claim 3,
further comprising a third actuator (340) positioned within the shoulder mount (316) and
operable to rotatably position the shoulder member (318) with respect to the shoulder mount (316) about the third axis (306).

5. The robot of claim 4,
further comprising a fourth actuator (342) positioned within the arm member (320) and
operable to rotatably position the arm member (320) with respect to the shoulder member (318) about the fourth axis (308) .

6. The robot of claim 5,
further comprising a fifth actuator (344) positioned within the arm member (320) and
operable to rotatably position the foot (322) with respect to the arm member (320) about the fifth axis (310).

7. The robot of claim 2,
wherein the first actuator (336) includes an electric motor.

8. The robot of any of the preceding claims,
wherein each leg (104) of a portion of the plurality of legs (104) includes a magnet (402) coupled to the foot (322) of the respective leg (104).

9. The robot of any of the preceding claims,
further comprising a non-destructive examination tool coupled to the foot (322) of a first leg (300) (104) of the plurality of legs (104)
and/or
further comprising an optical sensor (106) connected to the body (102) and operable to capture a visual image.

10. The robot of any of the preceding claims,
further comprising a transceiver coupled to the body (102) and operable to receive and transmit signals,
especially wherein the transceiver is connected to the controller (204) and wherein the transceiver receives control signals from an operator.

11. A robot for use in a confined space,
the robot (100) comprising:
a body (102);
an arrangement of six legs (104),
each leg (104) connected to the body (102) and
including:
a plurality of linkages arranged to define a first axis (302), a second axis (304), a third axis (306), a fourth axis (308) and a fifth axis (310), the first axis (302) normal to and coplanar with the second axis (304) regardless of the position of the plurality of linkages; and
a plurality of actuators,
especially wherein each actuator of the plurality of actuators includes an electric motor;
each actuator coupled to the leg (104) and
arranged to pivotally move a portion of the plurality of linkages about one of the first axis (302), the second axis (304), the third axis (306), the fourth axis (308) and the fifth axis (310);
a power supply coupled to the body (102) and
operable to deliver power to each actuator of the plurality of actuators,
especially wherein the power supply includes a rechargeable battery (202); and
a controller (204) coupled to the power supply and operable to selectively deliver power to each actuator of each leg (104) to move the robot (100).

12. The robot of claim 11,
further comprising an optical sensor (106) connected to the body (102) and operable to capture a visual image and/or
further comprising a non-destructive examination tool coupled to a foot (322) positioned at a first end of a first leg (300) (104) of the six legs (104).

13. The robot of any claims 11, 12,
further comprising a transceiver coupled to the body (102) and operable to receive and transmit signals,
especially wherein the transceiver is connected to the controller (204) and wherein the transceiver receives control signals from an operator.

14. The robot of any of the preceding claims 11 to 13, wherein four of the legs (104) include a magnet (402) coupled to a foot (322) positioned at a first end of each of the respective legs (104).

15. A method of operating a robot (500),
the method comprising using a robot (100) to any of the preceding claims,
especially:
positioning the robot (100) in a confined space, the robot (100) including a plurality of legs (104);
sequentially moving the legs (104) to propel the robot (100) from a first position to an inspection position;
visually confirming the robot (100) is in the inspection position using an optical sensor (106);
coupling a non-destructive examination tool to a first leg (300) of the plurality of legs (104);
positioning the non-destructive examination tool in an inspection position; and
performing a non-destructive test on a component,
especially comprising performing an ultrasonic examination of the component.

16. The method of claim 15,
further comprising magnetically attaching the robot (100) to a feature within the confined space.
